# EUROPÄISCHE PATENTANMELDUNG

(11) **EP 2 570 015 A1**
(43) Veröffentlichungstag der Anmeldung: **20.03.2013**
(21) Anmeldenummer: 12401177.6
(22) Anmeldetag: 23.08.2012
(51) Int. Cl.: A01C 7/04, A01C 7/08

(54) **Pneumatische Einzelkornsämaschine**

(30) Priorität: 15.09.2011 DE 102011053627
(71) Anmelder: Amazonen-Werke H. Dreyer GmbH & Co. KG, 49205 Hasbergen (DE)
(72) Erfinder: Brüggemann, Klaus, 27777 Ganderkesee (DE); Mertens, Daniel, 26135 Oldenburg (DE); Papen, Michael, 49733 Haren (Ems) (DE)

(57) **Zusammenfassung**

Pneumatische Einzelkornsämaschine mit zumindest einem mit Überdruck beaufschlagten, einen Saatgutvorratsbehälter aufweisenden Vereinzelungsgehäuse (1), in dem zumindest eine mit einer Druckdifferenz über in das Gehäuse (1) einmündenden und zumindest einer mit zumindest einem Gebläse verbundenen Luftzuführleitung (11) beaufschlagte rotierende Vereinzelungstrommel (2) angeordnet ist, wobei die Vereinzelungstrommel (2) in Perforationsreihen angeordnete Perforationen aufweist, an denen sich die Samenkörner (13) bei der Durchführung der Perforationen durch den Saatgutvorratsbehälterbereich anlagern, wobei dem Vereinzelungsgehäuse (1) eine Vorrichtung (23) zur Erzeugung eines Fließbettes des Saatgutes zumindest im unteren Anlagerungsbereiches (4) des Saatgutes an der Vereinzelungstrommel (2) zugeordnet ist, wobei die Vorrichtung (23) zur Erzeugung eines Fließbettes einen perforierten Bodenbereich des Vereinzelungsgehäuses (1) und/oder des Saatgutvorratsbehälters (12) in der Nähe der Vereinzelungstrommel (2) einströmt, wobei dem Bodenbereich zur Zuführung der Druckluft ein Luftzuführschacht (22), der mit der zumindest einen in das Gehäuse (1) einmündenden Luftzuführleitung (11) verbunden ist, zugeordnet ist, wobei Druckluft zur Erzeugung des Fließbettes aus dem Luftzuführschacht (22) durch den perforierten Bodenbereich (23) in den Vereinzelungsbereich des Vereinzelungsgehäuses (1) einströmt. Um eine Vergleichmäßigung der der Druckverteilung der zugeführten Druckluft im Luftzuführschacht vor den perforierten Bodenbereich zu erreichen, ist vorgesehen, dass in dem Luftzuführschacht (22) zwischen der Einmündung der zumindest einen Luftzuführleitung (11) und dem Bodenbereich (23) zumindest eine mit Luftdurchlassöffnungen (21, 28) versehene Zwischenwand (24, 27) angeordnet ist.

## Beschreibung

Die Erfindung betrifft eine pneumatische Einzelkornsämaschine gemäß des Oberbegriffes des Patentanspruches 1.

Eine derartige pneumatische Einzelkornsämaschine ist in der DE 10 2005 039 317 A1 beschrieben. Bei dieser Einzelkornsämaschine wird ein Teil der Vereinzelungstrommel im Vereinzelungsbereich durch einen Druckluftstrom mit einer Druckdifferenz beaufschlagt. Ein Teil des Druckluftstromes wird zur Erzeugung eines Fließbettes abgezweigt. Zur Erzeugung dieses Fließbettes weist die Vorrichtung einen perforierten Bodenbereich des Vereinzelungsgehäuses und/oder des Saatgutvorratsbehälters in der Nähe der Vereinzelungstrommel auf. Durch den perforierten Bodenbereich strömt Druckluft in den Saatgutvorratsbereich im Bereich des Vereinzelungsbereiches der Vereinzelungstrommel ein. Über den Luftzuführschacht, der bei dem perforierten Bodenbereich endet, wird die abgezweigte Druckluft entsprechend zugeleitet. Nun hat sich gezeigt, dass die Druckluft sich nicht ausreichend gleichmäßig innerhalb des Luftzuführschachtes verteilt, so dass nur eine ungleichmäßige Druckverteilung der zugeführten Druckluft im Luftzuführschacht vor dem perforierten Bodenbereich und somit ein ungleichmäßiges Fließbett entsteht. Dies führt zu einer schlechten Vereinzelung und Anlagerung der zu vereinzelnen Saatkörner an den Perforationen der Vereinzelungstrommel.

Der Erfindung liegt die Aufgabe zu Grunde, eine Vergleichmäßigung der Druckverteilung der zugeführten Druckluft im Luftzuführschacht vor den perforierten Bodenbereich zu erreichen.

Diese Aufgabe wird erfindungsgemäß dadurch gelöst, dass in dem Luftzuführschacht zwischen der Einmündung der zumindest einen Luftzuführleitung und dem Bodenbereich zumindest eine mit Luftdurchlassöffnungen versehene Zwischenwand angeordnet ist.

Infolge dieser Maßnahme entsteht vor der in dem Luftzuführschacht angeordneten Zwischenwand ein Luftstau. Dies führt dazu, dass die zugeführte Druckluft sich vor der Zwischenwand im Luftzuführschacht in seitlicher Richtung besser verteilt und anschließend durch die Luftdurchlassöffnungen vergleichmäßigt zu dem perforierten Bodenbereich innerhalb des Luftzuführschachtes strömt, so dass ein möglichst gleichmäßiges Fließbett über die gesamte Breite der Vereinzelungstrommel entsteht. Hierdurch wird eine verbesserte Anlagerung der zu vereinzelnen Saatkörner an den Perforationen der Vereinzelungstrommel erreicht.

Eine einfache Ausgestaltung der Zwischenwand zum Zwecke der gleichmäßigen Luftdruckverteilung wird dadurch erreicht, dass die Zwischenwand als Luftdruckvergleichmäßigungswand und/oder -einrichtung ausgebildet ist.

Um in einfacher Weise zu erreichen, dass die Luft mit einer vergleichmäßigten Luftdruckverteilung zu den perforierten Bodenbereich zur Erzeugung eines möglichst gleichmäßigen Fließbettes gelangt, ist vorgesehen, dass die Zwischenwand perforiert ausgebildet ist.

In einer Ausführungsform ist vorgesehen, dass die Luftdurchlassöffnungen in der Zwischenwand jeweils einen zumindest annähernd gleich großen Querschnitt aufweisen.

In einer anderen Ausführungsform ist vorgesehen dass die Luftdurchlassöffnungen in der Zwischenwand in dem Außenbereich in der Nähe der Seitenwandungen des Luftzuführschachtes größer als in der Mitte der Zwischenwand ausgebildet sind. Dieser Ausgestaltung trägt dem Phänomen Rechnung, dass durch Reibungsverluste der zu strömenden Luft im Bereich der Seitenwände ein Druckabfall entsteht, so dass denn noch eine gleichmäßige Luftdruckverteilung zur Erzeugung eines gleichmäßigen Fließbettes über die gesamte Breite der Vereinzelungstrommel erreichbar ist.

In einer anderen Ausführungsform ist vorgesehen, dass die Luftdurchlassöffnungen in der Mitte der Zwischenwand des Luftzuführschachtes größer als im übrigen Bereich ausgebildet sind. Diese Variante wird man wählen, wenn die Druckluftzuführung nicht in der Mitte des Luftzuführschachtes erfolgt.

Bei einer Einzelkornsämaschine, bei der in dem Gehäuse ein sich parallel zur Vereinzelungstrommel erstreckendes Luftdruckzuführrohr angeordnet ist, wobei in dieses Luftdruckzuführrohr die zumindest eine Luftzuleitung einmündet, und wobei das Luftdruckzuführrohr Verbindungsöffnungen zu dem Luftzuführschacht aufweist, ist vorgesehen, dass die Verbindungsöffnungen in dem Luftdruckzuführrohr zu dem Luftzuführschacht als Luftdruckvergleichmäßigungseinrichtung und/oder -wand ausgebildet sind, dass die Verbindungsöffnungen jeweils einen zumindest annähernd gleich großen Querschnitt aufweisen.

Um sich unterschiedlichen Einsatzbedingungen und Saatgutsorten in einfacher Weise anpassen zu können, um ein gleichmäßiges Fließbett zu erreichen, ist vorgesehen, dass die Zwischenwand in austauschbarer Weise dem Luftzuführschacht zugeordnet und gegen eine Zwischenwand mit Luftdurchlassöffnungen anderen Querschnitts und/oder Ausgestaltung und/oder Querschnittsgröße austauschbar ist.

Weitere Einzelheiten der Erfindung sind der Beispielsbeschreibung und den Zeichnungen zu entnehmen. Hierbei zeigen
- Fig. 1: das Vereinzelungsgehäuse mit dem unteren Teil des Vorratsbehälters der Einzelkornsämaschine in perspektivischer Ansicht und in vereinfachter Darstellung,
- Fig. 2: das Vereinzelungsgehäuse mit dem unteren Teil des Vorratsbehälters der Einzelkornsämaschine in perspektivischer Ansicht und in vereinfachter Darstellung, wobei die vordere Seitenwand entfernt ist,
- Fig. 3: das Vereinzelungsgehäuse gemäß Fig. 1 in Vorderansicht,
- Fig. 4: das Vereinzelungsgehäuse gemäß Fig. 1 mit Vereinzelungstrommel im Schnitt IV - IV,
- Fig. 5: das Druckluftverteilungsrohr der Einzelkornsämaschine gemäß den Fig. 1 bis 4 in perspektivischer Darstellung,
- Fig. 6: das Vereinzelungsgehäuse einer weiteren Einzelkornsämaschine in Ausgestaltung für die Ausbringung für Getreide mit Zuführung des Saatgutes aus einem separaten Vorratstank im sogenannten Nursingverfahren in perspektivischer Ansicht und in vereinfachter Darstellung, wobei die vordere Seitenwand entfernt ist,
- Fig. 7: das Vereinzelungsgehäuse gemäß Fig. 6 in Vorderansicht,
- Fig. 8: das Vereinzelungsgehäuse gemäß Fig. 6 mit Vereinzelungstrommel im Schnitt VIII - VIII,
- Fig. 9: die Druckverteilungsplatte der Einzelkornsämaschine gemäß Fig. 6 in perspektivischer Darstellung und
- Fig. 10: die Druckverteilungsplatte der Einzelkornsämaschine gemäß Fig. 9 in Vorderansicht,
- Fig. 11: das Vereinzelungsgehäuse der Einzelkornsämaschine gemäß Fig.6 in Ausgestaltung für die Ausbringung für Raps mit Zuführung des Saatgutes aus einem separaten Vorratstank im sogenannten Nursingverfahren in perspektivischer Ansicht und in vereinfachter Darstellung, wobei die vordere Seitenwand entfernt ist und
- Fig. 12: das Vereinzelungsgehäuse der Einzelkornsämaschine gemäß Fig.11 in der Ansicht XII - XII.

Die Einzelkornsämaschine weist das Vereinzelungsgehäuse 1 mit der darin drehbar gelagerten und angetriebenen Vereinzelungstrommel 2, auf. Über eine nicht dargestellte Antriebsvorrichtung wird die Vereinzelungstrommel 2 in Rotation versetzt. Oberhalb der Vereinzelungstrommel 2 ist der Vorratsbehälter 3, von dem nur der untere Teilbereich dargestellt ist, angeordnet. In dem Umfangsmantel der Vereinzelungstrommel 2 sind in bekannter und daher nicht dargestellter Weise kreisförmig in Perforationsreihen angeordnete Perforationen angebracht. Der Vorratsbehälter 3 und das Vereinzelungsgehäuse 1 werden auf der Vereinzelungsseite 4 der Trommel 2 mit einem Überdruck beaufschlagt. Somit entsteht eine Druckdifferenz zwischen dem Innenraum 5 der Vereinzelungstrommel 2 und dem Außenbereich 6 der Vereinzelungstrommel 2 in deren Vereinzelungsbereich 8. Die Druckdifferenz wird durch ein nicht dargestelltes Gebläse erzeugt. Das Gebläse ist über die Anschlussstutzen 9 an das Druckverteilungsrohr 10 des Vereinzelungsgehäuses 1 mittels der Luftleitungen 11 angeschlossen. Wenn die Vereinzelungstrommel 2 durch den Saatgutvorrat 12, der sich zumindest in dem unteren Bereich der Vereinzelungstrommel 2 in dem Vereinzelungsgehäuse 1 befindet, geführt wird, lagern sich an der Perforationen auf der Außenseite 6 der perforierten Trommel 2 Samenkörner 13 an. Die Seitenwände 14 des Vereinzelungsgehäuses 1 erstrecken sich parallel zur Bewegungsrichtung der Trommel 1 und wirken zumindest annähernd abdichtend mit der Trommel 1 zusammen.

Des Weiteren ist der Trommel 2 eine die an die Perforationen angelegte Druckdifferenz zum Ablösen der Samenkörner 13 von den Perforationen unterbrechende Abdeckeinrichtung 15 im Innenraum 5 der Trommel 2 angeordnet. Diese Abdeckeinrichtung 15 weist auf einer am Vereinzelungsgehäuse 1 angeordneten Welle drehbar gelagerte walzenartige Elemente 16 auf.

Im Vereinzelungsbereich 8 der Trommel 2 ist zwischen dem Saatgutvorratsbereich 12 und dem Bereich, dem die Abdeckeinrichtung 15 zugeordnet ist, eine bekannte und daher nicht dargestellte Abstreifereinrichtung angeordnet, um Doppelbelegungen an den Perforationen zu vermeiden.

Weiterhin weist die Einzelkornsämaschine bis an die Trommeloberfläche der Trommel 2 heranreichende, mit Einmündungsöffnungen 17 versehene Ausbringleitungen 18 auf, welche zu Ausbringelementen, wie beispielsweise Säscharen, führen. Mittels dieser Ausbringleitungen 18 sind die von der Vereinzelungstrommel 2 vereinzelten Saatkörner den Ausbringelementen mittels eines Luftstromes über die Ausbringleitungen 18 zuführbar. Hierbei reicht jeweils das eine Ende der Ausbringleitungen 18 mit ihrer jeweiligen Einmündungsöffnung 17 bis an die Trommeloberfläche der Trommel 2 heran, um so eine sichere Übergabe des vereinzelten Saatkornes über die jeweilige Einmündungsöffnung 17 in die jeweilige Ausbringleitung 18 zu gewährleisten.

Über die Luftleitungen 11 wird dem Druckverteilungsrohr 10 Druckluft zugeführt. In dem Druckrohr 10 sind erste Öffnungen 19 angeordnet, an welche sich Verbindungsrohre 20 anschließen, die zur Erzeugung der Druckdifferenz an der Vereinzelungstrommel 2 im Vereinzelungsbereich 8 der Vereinzelungstrommel 2 ausmünden. Weiterhin sind in dem Druckrohr 10, in dem die zweiten zweiten Öffnungen angeordnet sind, über welche die zu geführte Druckluft in einen Luftzuführschacht 22 einströmt, der zum unteren Bereich der Vereinzelungsseite 4 der Trommel 2 führt. Der Luftzuführschacht 22 ist zu dem Saatgutvorrat 12 des Vorratsbehälters 1 durch eine Siebplatte 23 getrennt. Durch die Öffnungen in der Siebplatte 23, der den perforierten Bodenbereich im Vereinzelungsbereich 4 des Vereinzelungsgehäuses 1 bildet, strömt Druckluft in den Saatgutvorrat 12 ein und erzeugt im unteren Anlagerungsbereich der Saatkörner 13 an den Perforationen der Vereinzelungstrommel 2 ein Fließbett.

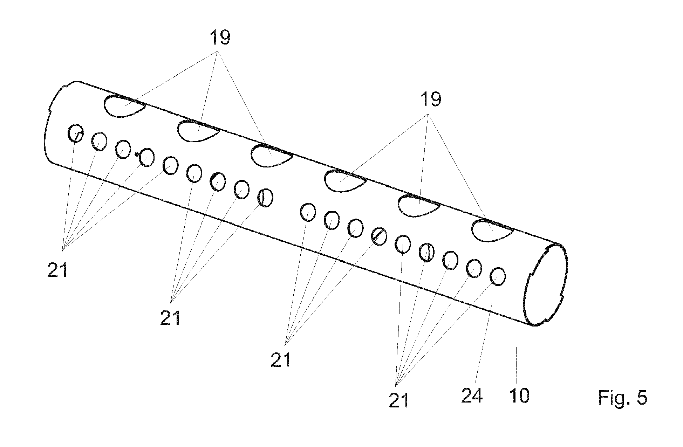

Der der sich in den oberen Bereich des Luftzuführschachtes 22 befindliche Teil des Druckrohres 10, in dem sich die als Luftdurchlassöffnungen 21 ausgebildeten zweiten Öffnungen finden, bildet die mit Luftdurchlassöffnungen 21 versehene Zwischenwand 24, wobei ein Teil des Druckrohres 10 als Teil des Luftzuführschachtes 22 angesehen wird. Somit ist in dem Luftzuführschacht 22 zwischen der Einmündung der Luftzuführleitungen 11 und dem Bodenbereich 23 zumindest eine mit Durchlassöffnungen 21 versehene Zwischenwand 24 angeordnet. Hierbei ist die Zwischenwand 24 als Luftdruckvergleichmäßigungswand und/oder -einrichtung ausgebildet. Durch die in dieser Zwischenwand 24 angeordneten Luftdurchlassöffnungen 21 ist die Zwischenwand 24 perforiert ausgebildet. In diesem Ausführungsbeispiel weisen die Luftdurchlassöffnungen 21 in der Zwischenwand 24 jeweils einen zumindest annähernd gleich großen Querschnitt auf, wie in der Fig. 5 dargestellt ist.

Durch die die Ausgestaltung der Luftdurchlassöffnungen 21 wird erreicht, dass der durch die Leitungen 11 zugeführte Druckluftstrom sich in dem Druckrohr 10 verteilt und dann in gleichmäßiger Weise durch die Luftdurchlassöffnungen 21 in den Luftzuführschacht 22 einströmt und damit über die gesamte Breite der Vereinzelungstrommel 2 zumindest ein annähernd gleichmäßiges Fließbett des Saatgutvorrates 12 im unteren Anlagerungsbereich der Saatkörner 13 an den Perforationen der Vereinzelungstrommel 2 erreicht wird.

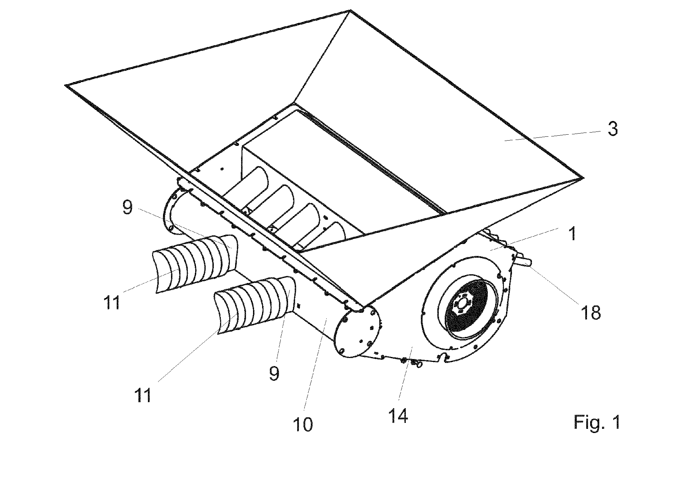

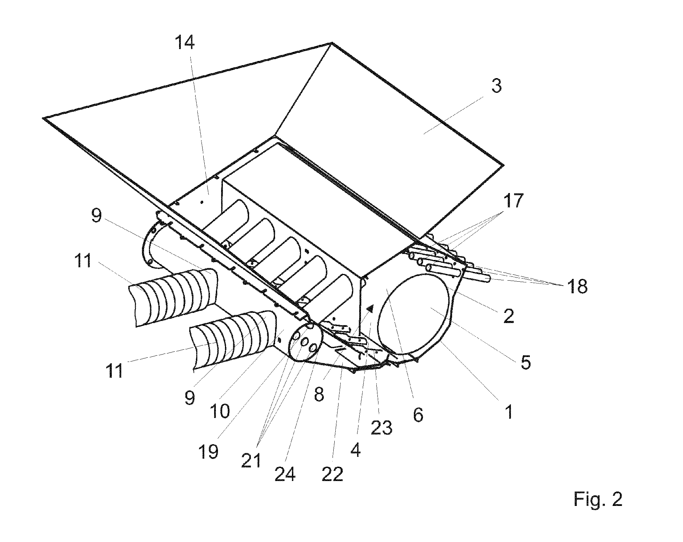

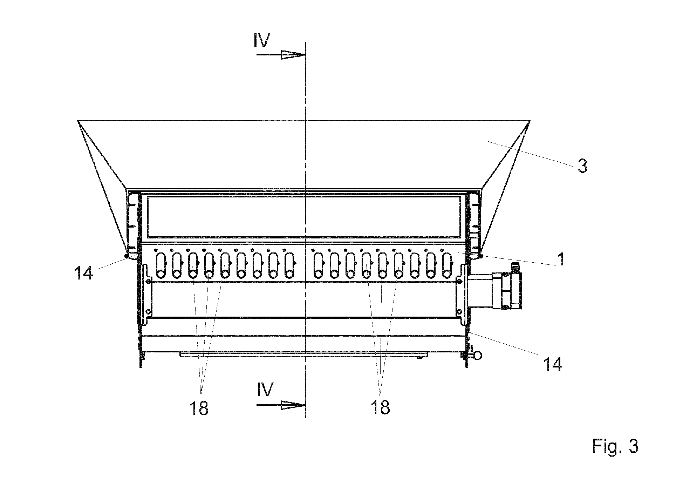

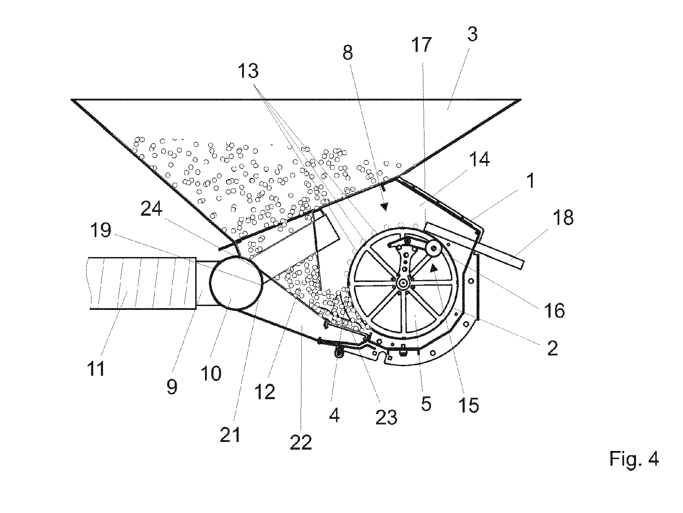

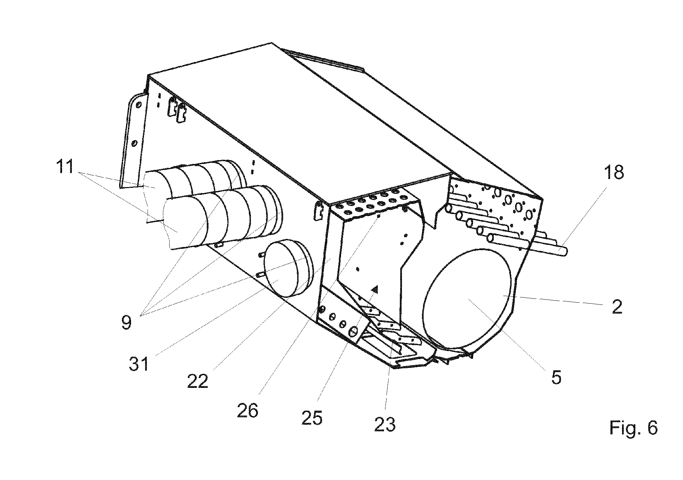

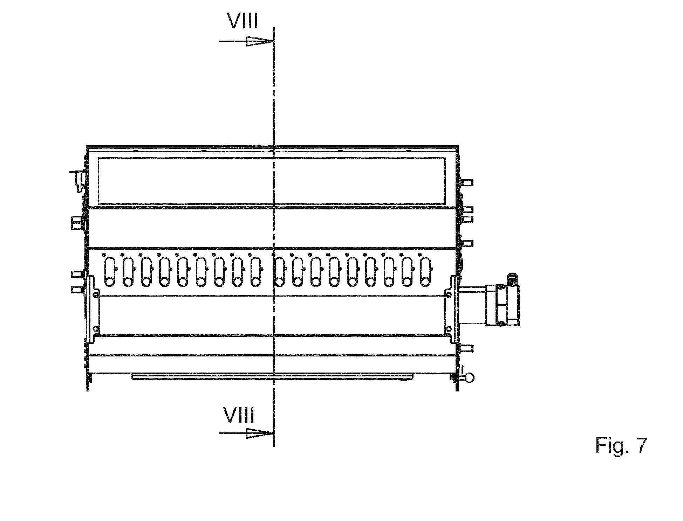

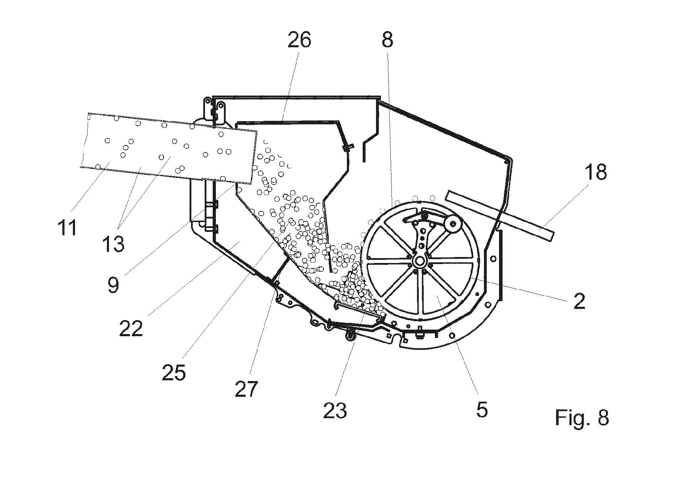

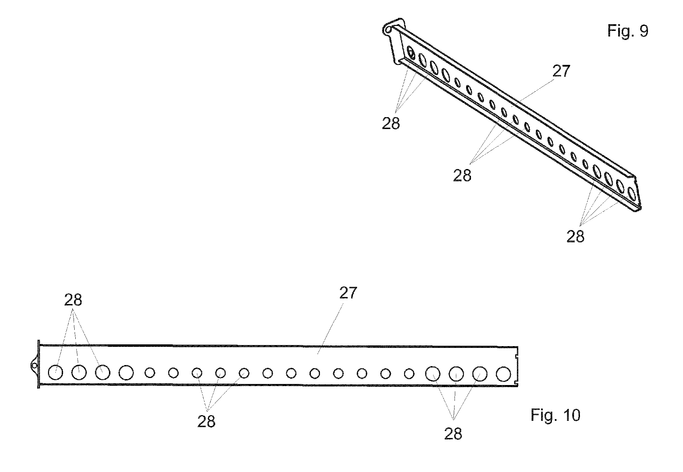

Das Vereinzelungsgehäuse der Einzelkornsämaschine gemäß Fig.6 bis 8 ist für das so genannte Nursing-Verfahren vorgesehen. Die Vereinzelung der Einzelkornsämaschine gemäß den Fig.6 bis 8 entspricht der Vereinzelung der Saatkörner 13 gemäß der Einzelkornsämaschine nach den Fig. 1 bis 4. Diese Einzelkornsämaschine weist keinen eigenen großen Vorratsbehälter, sondern nur einen kleinen Saatgutvorratsbereich 25 auf. Die auszubringenden Saatkörner werden dem Saatgutvorratsbereich 25 über die Zuleitungen 11 über Druckluft aus einem entfernt liegenden Vorratsbehälter zugeleitet. Das Saatgut wird also in den Saatgutvorratsbereich 25 über die Leitungen 11 mittels Druckluft eingeblasen. Die Druckluft dient gleichzeitig dazu, den Vereinzelungsbereich 8 der Vereinzelungstrommel 2 mit Druckluft zu beaufschlagen, so dass zwischen dem Außen- und Innenbereich der Vereinzelungstrommel 2 eine Druckdifferenz entsteht. Damit das Saatgut in der richtigen Weise in den Saatgutvorratsbehälterbereich verbleibt, ist oberhalb dieses Vorratsbehälterbereiches beabstandet zu dem oberen Bereich des Vereinzelungsgehäuses ein siebartiges Trennelement 26 angeordnet. Über die Durchbrüche in dem siebartigen Trennelement 26 strömt Druckluft in den Luftzuführschacht 22 ein. In dem Luftzuführschacht 22 ist eine Zwischenwand 27 mit Luftdurchlassöffnungen 28 gemäß Fig. 10 angeordnet. Diese Zwischenwand 27 ist perforiert ausgebildet. Weiterhin ist die Zwischenwand 27 als Luftdruckvergleichmäßigungswand und/oder -einrichtung ausgebildet. Diese mit Luftdurchlassöffnungen 28 versehene Zwischenwand 27 ist zwischen den Luftzuführleitungen 11 und dem Bodenbereich 23 in dem Luftzuführschacht 22 angeordnet. Die Luftdurchlassöffnungen 28 in der Zwischenwand 27 sind in dem Außenbereich in der Nähe der Seitenwände des Luftzuführschachtes 22 größer als in der Mitte der Zwischenwand 27 ausgebildet. Weiterhin kann diese Zwischenwand 27 in herausnehmbarer und austauschbarer Weise, so dass sie gegen Zwischenwände mit anders ausgestalteten Luftdurchlassöffnungen austauschbar ist, angeordnet sein. Durch die entsprechende Ausgestaltung der Luftdurchlassöffnungen 27 in der in dem Luftzuführschacht 22 angeordneten Zwischenwand 28 wird erreicht, dass zumindest annähernd über die gesamte Breite der Vereinzelungstrommel 22 ein gleichmäßiges Fließbett entsteht.

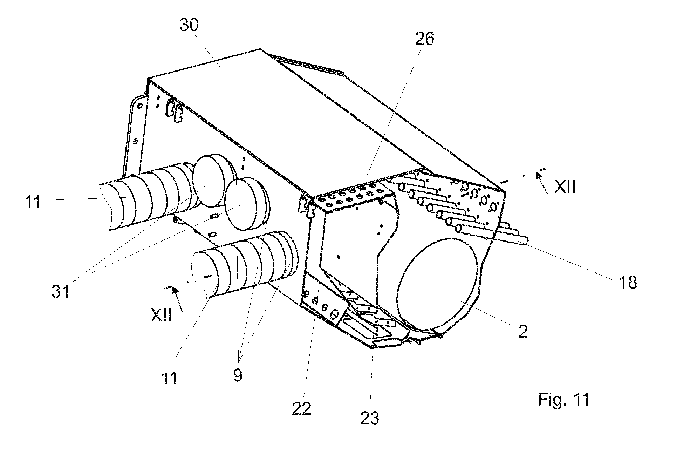

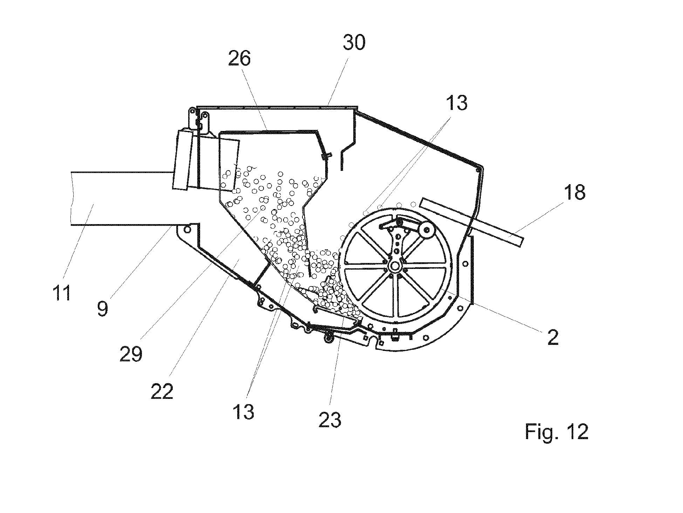

Das in den Fig.11 und 12 dargestellte Vereinzelungsgehäuse einer Einzelkornsämaschine entspricht dem in den Fig. 6 -8 dargestellten Vereinzelungsgehäuse, wobei jedoch die Luftzuleitungen 11 an anderen Anschlussstutzen 9, die in das Vereinzelungsgehäuse einmündend angeordnet sind. Diese Luftzuleitungen 11 münden in den Luftzuführschacht 22 ein. Diese Anordnung wird dann gewählt, wenn Raps ausgebracht wird. Der Raps wird in dem Saatgutvorratsbereich 29 des Vereinzelungsgehäuses eingefüllt, in dem das obere Deckelelement 30 des Vereinzelungsgehäuses und die Zwischenwand 27 aufgeklappt werden. In dem Luftzuführschacht 22 ist wiederum die Luftdurchlassöffnungen 28 aufweisende Zwischenwand 27 zur Vergleichmäßigung der Luftzuführung zur Erzeugung eines Fließbettes angeordnet.

Somit lässt sich die Einzelkornsämaschine gemäß den Fig.6 bis 11 in einfacher Weise von dem dortigen Nursing - Verfahren auf die Saatgutausbringung gemäß Fig.11 und 12 umrüsten, in dem in einfacher Weise die Luftzuführleitungen 11 an den jeweiligen Anschlussstutzen 9 befestigt werden, während die nicht benutzten Anschlussstutzen 9 durch Verschlussstopfen 31 verschlossen werden.

## Patentansprüche

1. Pneumatische Einzelkornsämaschine mit zumindest einem mit Überdruck beaufschlagten, einen Saatgutvorratsbehälter aufweisenden Vereinzelungsgehäuse, in dem zumindest eine mit einer Druckdifferenz über in das Gehäuse einmündenden und zumindest einer mit zumindest einem Gebläse verbundenen Luftzuführleitung beaufschlagte rotierende Vereinzelungstrommel angeordnet ist, wobei die Vereinzelungstrommel in Perforationsreihen angeordnete Perforationen aufweist, an denen sich die Samenkörner bei der Durchführung der Perforationen durch den Saatgutvorratsbehälterbereich anlagern, wobei dem Vereinzelungsgehäuse eine Vorrichtung zur Erzeugung eines Fließbettes des Saatgutes zumindest im unteren Anlagerungsbereiches des Saatgutes an der Vereinzelungstrommel zugeordnet ist, wobei die Vorrichtung zur Erzeugung eines Fließbettes einen perforierten Bodenbereich des Vereinzelungsgehäuses und/oder des Saatgutvorratsbehälters in der Nähe der Vereinzelungstrommel einströmt, wobei dem Bodenbereich zur Zuführung der Druckluft ein Luftzuführschacht, der mit der zumindest einen in das Gehäuse einmündenden Luftzuführleitung verbunden ist, zugeordnet ist, wobei Druckluft zur Erzeugung des Fließbettes aus dem Luftzuführschacht durch den perforierten Bodenbereich in den Vereinzelungsbereich des Vereinzelungsgehäuses einströmt, **dadurch gekennzeichnet, dass** in dem Luftzuführschacht (22) zwischen der Einmündung der zumindest einen Luftzuführleitung (11) und dem Bodenbereich (23) zumindest eine mit Luftdurchlassöffnungen (21, 28) versehene Zwischenwand (24, 27) angeordnet ist.

2. Einzelkornsämaschine nach Anspruch 1, **dadurch gekennzeichnet, dass** die Zwischenwand (24, 27) als Luftdruckvergleichmäßigungswand und/oder -einrichtung ausgebildet ist.

3. Einzelkornsämaschine nach zumindest einem der vorstehenden Ansprüche, **dadurch gekennzeichnet, dass** die Zwischenwand (24, 27) perforiert ausgebildet ist.

4. Einzelkornsämaschine nach zumindest einem der vorstehenden Ansprüche, **dadurch gekennzeichnet, dass** die Luftdurchlassöffnungen (21) in der Zwischenwand (24) jeweils einen zumindest annähernd gleich großen Querschnitt aufweisen.

5. Einzelkornsämaschine nach zumindest einem der vorstehenden Ansprüche, **dadurch gekennzeichnet, dass** die Luftdurchlassöffnungen (28) in der Zwischenwand (27) in dem Außenbereich in der Nähe der Seitenwandungen des Luftzuführschachtes (22) größer als in der Mitte der Zwischenwand (27) ausgebildet sind.

6. Einzelkornsämaschine nach zumindest einem der vorstehenden Ansprüche, **dadurch gekennzeichnet, dass** die Luftdurchlassöffnungen in der Mitte der Zwischenwand des Luftzuführschachtes größer als im übrigen Bereich ausgebildet sind.

7. Einzelkornsämaschine nach zumindest einem der vorstehenden Ansprüche, wobei in dem Gehäuse ein sich parallel zur Vereinzelungstrommel erstreckendes Luftdruckzuführrohr angeordnet ist, wobei in dieses Luftdruckzuführrohr die zumindest eine Luftzuleitung einmündet, wobei das Luftdruckzuführrohr Verbindungsöffnungen zu dem Luftzuführschacht aufweist, **dadurch gekennzeichnet, dass** die Verbindungsöffnungen (21) in dem Luftdruckzuführrohr (10) zu dem Luftzuführschacht (22) als Luftdruckvergleichmäßigungseinrichtung und/oder -wand ausgebildet sind, dass die Verbindungsöffnungen (21) jeweils einen zumindest annähernd gleich großen Querschnitt aufweisen.

8. Einzelkornsämaschine nach zumindest einem der vorstehenden Ansprüche, **dadurch gekennzeichnet, dass** die Zwischenwand (27) in austauschbarer Weise dem Luftzuführschacht zugeordnet und gegen eine Zwischenwand mit Luftdurchlassöffnungen anderen Querschnitts und/oder Ausgestaltung und/oder Querschnittsgröße austauschbar ist.
